# FASCICULE DE BREVET EUROPEEN

(11) **EP 0 532 382 B1**
(45) Date de publication et mention de la délivrance du brevet: **15.04.1998**
(21) Numéro de dépôt: 92402369.0
(22) Date de dépôt: 31.08.1992
(51) Int. Cl.: G06F 9/44

(54) **Procédé de gestion d'objets structurés**
Verwaltungsverfahren von strukturierten Objekten
Method for management of structured objects

(30) Priorité: 13.09.1991 FR 9111341
(43) Date de publication de la demande: 17.03.1993
(73) Titulaire: BULL S.A., 92800 Puteaux (FR)
(72) Inventeur: Lutoff, Daniel, F-38400 St Martin d'Heres (FR)
(74) Mandataire: Debay, Yves

(56) Documents cités:
- WO-A-91/03791
- A. V. AHO ET AL 'Compilers Principles, Techniques and Tools' 1986 , ADDISON- WESLEY PUBLISHING CO , USA
- J. T. BERRY 'The Waite Group's C++ Programming' 1989 , GARY MASTERS EDITOR , USA
- COMMUNICATIONS OF THE ASSOCIATION FOR COMPUTING MACHINERY. vol. 33, no. 9, Septembre 1990, NEW YORK US pages 104 - 124 R. J. WIRFS-BROCK AND R. E. JOHNSON 'Surveying current research in object-oriented design'
- OOPSLA '88 OBJECT-ORIENTED PROGRAMMING SYSTEMS, LANGUAGES AND APPLICATIONS CONFERENCE PROCEEDINGS 25 Septembre 1988, SAN DIEGO, CA, USA pages 206 - 221 A. BJ RNERSTEDT AND S. BRITTS 'AVANCE : An Object Management System'

## Description

La présente invention concerne un procédé de gestion d'objets structurés par une interface applicative fournissant une pluralité de services, définissant un jeu de fonctions et l'ensemble d'objets structurés sous des formes publiques et privées représentés au moyen de descripteurs et arrangés selon différentes classes ayant chacune sa description, offrant des primitives de service comportant des paramètres définis par l'intermédiaire desdits objets et prévue pour être utilisée avec d'autres interfaces applicatives.

Un tel procédé de gestion d'objets structurés, c'est-à-dire d'informations complexes, est connu du document : "API to OSI Object Management (XOM) X/Open Preliminary Specification (1990)" édité par "X/Open" conjointement avec "X.400 API Association" . De manière générale, la représentation d'un objet privé comporte deux parties, une première partie générique qui concerne l'en-tête et une partie spécifique qui concerne la représentation réelle ou effective de l'objet et donc du paramètre.

Dans la solution proposée par l'OSF dans le document "API to Directory Services (XDS) X/Open Preliminary Specification (1990)" édité par "X/Open" conjointement avec "X.400 API Association", la représentation réelle de l'objet privé correspond au paramètre de sortie, c'est-à-dire au paramètre d'appel du service vers lequel les objets doivent être transmis (translatés). Ce service est constitué d'un ensemble de fonctions ou librairies qu'il est possible d'appeler pour traiter les différents paramètres ou objets et dans ce service un paramètre est une structure C particulière, par conséquent selon ladite solution la représentation d'un objet privé correspond à cette structure C. Cette solution comporte des inconvénients dont le principal réside dans le fait que la manipulation des objets privés ou paramètres n'est pas indépendante de la définition desdits objets ce qui a pour effet de compliquer excessivement le traitement et diminuer l'efficacité du procédé. En effet, lorsqu'une pluralité d'objets doit être traitée, chaque fonction utilisée doit être appliquée à chacun des objets qui correspond à une structure C particulière, le nombre d'opérations devient alors vite excessif.

En outre, toujours selon cette solution, chaque classe est représentée de manière unique avec une description qui lui est propre et lors de la manipulation d'un objet il est nécessaire de connaître ladite classe pour savoir quelle est la structure C particulière correspondant à l'objet concerné. Ceci a pour inconvénient majeur d'apporter encore une certaine lourdeur au traitement et d'empêcher l'automatisme des différentes fonctions appliquées.

Le but de la présente invention est de proposer un procédé de gestion d'objets structurés qui ne présente pas les divers inconvénients de la solution connue, de manière particulière l'invention apporte une solution avantageuse au problème posé dans le document "Consolidated Management API Specification", Version 1.0 - 1 May 1991, édité par BULL S.A. et soumis à l'OSF et à X/Open.

Pour cela, le procédé de gestion d'objets structurés du genre mentionné dans le préambule est remarquable en ce qu'il utilise d'une part une représentation des objets privés sensiblement égale à la représentation des objets publics de sorte que les paramètres soient manipulés de manière générique, un objet public étant représenté au moyen d'un tableau de descripteurs alors qu'un objet privé est représenté au moyen d'une liste de descripteurs et d'autre part un catalogue organisé selon une structure spécifiant une définition globale des différentes classes supportées à partir d'une liste desdites classes de manière à automatiser les différentes fonctions de l'interface applicative.

Ainsi, l'idée de l'invention consiste à choisir une représentation réelle des objets privés quasiment égale à la représentation publique, de manière caractéristique l'objet public est représenté au moyen d'un tableau de descripteurs et l'objet privé au moyen d'une liste de descripteurs. Grâce à ce choix, il est autorisé une manipulation des objets privés indépendante de la définition desdits objets. En fait, cette solution a été choisie malgré un préjugé défavorable. En effet, un tel choix impose de passer par une représentation interne (la liste de descripteurs) qui est intermédiaire avant d'opérer la translation vers le service désiré, le nombre d'opérations paraissant alors a priori plus important. Le fait de vaincre ce préjugé à permis au contraire d'améliorer l'efficacité en simplifiant considérablement le traitement des objets, car une fois la liste de descripteurs établie, toutes les fonctions sont appliquées de manière totalement automatique et indépendante des classes, la représentation privée, dans ce cas, ne consistant qu'à s'occuper de la partie générique concernant l'en-tête et ceci pour chacune des fonctions et ensuite seulement n'est opérée qu'une unique translation de l'ensemble vers le service désiré, or c'est l'opération de translation qui est dommageable à l'efficacité. De cette façon l'interface est utilisée de manière performante.

En outre, la liste des classes supportées présentée par un catalogue permet de rester indépendant de la définition d'une classe. L'aspect sémantique lié à la classe n'est plus préoccupant, il n'est plus nécessaire de connaître la classe manipulée pour savoir quelle est la structure C particulière à remplir, il suffit de parcourir la liste sans s'arrêter à la nature de l'information. Ainsi est obtenue une quasi-généricité et la manipulation est automatique. De plus, le catalogue selon l'invention permet d'obtenir une interface applicative indépendante du service, car il suffit de remplir ledit catalogue avec les paramètres de service.

Le fait de travailler sur un catalogue est d'une grande importance dans la solution choisie : représentation privée sensiblement égale à la représentation publique. Le catalogue, en effet, permet de remplir la représentation interne des objets de la façon la plus systématique et la plus performante possible, car il fournit une description à l'extérieur des classes. Le catalogue est lui-même rempli de manière automatique à partir des spécifications, ces dernières étant simplement parcourues pour le remplir. Un changement de spécifications entraîne automatiquement la régénération du catalogue.

Le gain en performance peut être explicité de la manière suivante. Dans l'art antérieur, la question se pose de savoir comment remplir la structure C particulière, lorsqu'il existe N classes et X fonctions. Dans ce cas, N procédures sont nécessaires pour remplir une fonction donnée et NX procédures sont nécessaires pour remplir l'ensemble des fonctions. Selon la présente invention, passant par la représentation interne intermédiaire qui est la liste, les X fonctions sont remplies automatiquement, il y a donc X procédures indépendantes des classes. Puis, pour passer à la structure C particulière pour N classes il y a N procédures, soit en tout (N + X) procédures. Sachant qu'il y a au moins x = 6 fonctions à remplir systématiquement, le gain en nombre de procédures est déjà conséquent pour seulement N = 2 classes, ainsi dans ce cas simple :
- procédé de l'art antérieur : NX = 12 procédures
- procédé selon l'invention : N + X = 8 procédures

Enfin, un autre aspect intéressant tient au contrôle syntaxique des objets obtenu avantageusement grâce au présent procédé. En effet, la représentation réelle d'un objet est alors une liste de descripteurs, cette liste peut être confrontée avec la description d'une classe. Ceci permet de réaliser un contrôle automatique entre un objet et sa spécification et de fournir une procédure globale pour la vérification. Dans l'art antérieur pour chaque structure C particulière, il était obligatoire d'effectuer un contrôle.

La description suivante en regard des dessins annexés, le tout donné à titre d'exemple non limitatif, fera bien comprendre comment l'invention peut être réalisée.

La figure 1 propose un exemple d'architecture d'une application dans laquelle peut être utilisé à son niveau le procédé de gestion d'objets structurés.

La figure 2 représente un exemple de schéma de l'architecture interne de l'interface applicative.

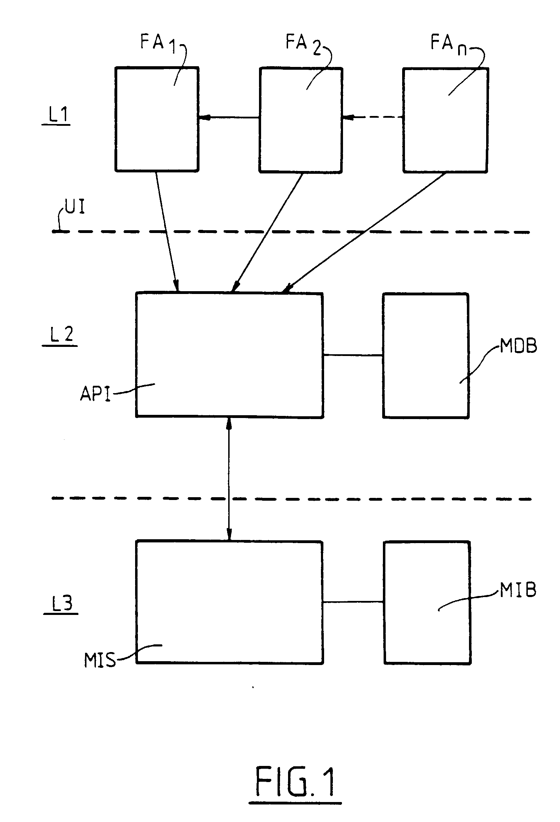

Sur la figure 1 est proposé un exemple d'architecture d'une application décrivant synthétiquement l'environnement dans lequel est utilisé le procédé selon l'invention. Sur la figure est représenté de manière schématique une application décomposée en trois niveaux d'activité. Le premier niveau L1 contient les applications de gestion groupées en zones fonctionnelles, FA1, FA2, ..., FAn, chaque application fournissant un jeu de services limité à sa zone fonctionnelle. L'interface utilisateur UI contient toutes les fonctions nécessaires pour fournir à l'utilisateur l'accès aux informations administratives, la possibilité d'exécuter des opérations administratives ainsi que les canaux d'accès aux signaux relatifs aux objets gérés.

Le second niveau L2 contient les services communs à une ou plusieurs applications de gestion. A ce niveau L2 est gérée la base de données de gestion MDB contenant toutes les informations administratives qui ne sont pas contenues dans la base d'informations de gestion MIB présente au troisième niveau L3. Au niveau L2 se trouve par exemple l'interface applicative API permettant de gérer les objets structurés auxquels est appliqué le procédé selon l'invention.

Le troisième niveau L3 contient toutes les fonctions standards donnant accès à la base d'informations MIB. La base MIB est représentative du jeu d'objets gérés relatif à une application d'administration. Un module de services d'informations de gestion MIS fournit des services pour transmettre ou recevoir des messages d'informations de gestion qui sont propagés dans le réseau.

Chaque niveau est conçu pour être indépendant du niveau supérieur, ceci signifie en particulier que les modules du niveau L2 sont indépendants de l'interface utilisateur UI. Cette indépendance entraîne une pluralité d'avantages. En particulier, elle permet des applications modulables, des développements parallèles, une maintenance facilitée et des possibilités d'extension ainsi qu'elle offre la possibilité d'une utilisation de l'interface utilisateur UI pour des applications indépendantes.

Pour une meilleure appréhension de l'idée de l'invention suivent quelques précisions et définitions relatives à la terminologie et aux concepts employés dans le domaine d'application concerné.

La gestion d'objets consiste en une manipulation d'informations complexes. Elle permet de présenter à un programmeur un modèle uniforme d'informations basées sur les concepts de groupes ou classes d'objets ou informations similaires explicités ci-après.

L'interface applicative ici concernée permet de gérer ce type d'informations ou objets. Elle est prévue pour être utilisée avec d'autres interfaces applicatives pour le transfert de messages ou pour offrir des services de gestion d'un système. Une telle interface définit un jeu de fonctions et un ensemble d'objets structurés, elle est organisée pour autoriser des fonctionnements multiples distincts administrés par des utilisateurs indépendants. Chaque utilisateur a la possibilité de manipuler des objets d'espèces particulières, ceci est permis grâce au concept d'espaces de travail.

Un service est créé et utilisé dans le but de permettre, sous la direction d'un utilisateur, de manipuler des objets qui peuvent être publics ou privés.

Un objet public est représenté par une structure de données dont le format est contenu dans la spécification du service. Par conséquent, l'utilisateur manipule les objets publics directement au moyen de langages de programmation. Les objets publics eux-mêmes sont de deux sortes, ils peuvent être générés par l'utilisateur et également par le service.

Un objet privé est, de son côté, représenté avec une spécificité propre. Ainsi l'utilisateur n'accède aux objets privés que de manière indirecte par l'intermédiaire des fonctions de l'interface applicative.

Un objet peut comporter des éléments d'informations appelés attributs, eux-mêmes comportant des éléments représentatifs du type de l'attribut et des valeurs affectées à l'attribut, chaque valeur étant accompagnée d'un nombre entier relatif à sa syntaxe. Une valeur correspond à un élément d'information qui peut être considéré comme une caractéristique ou une propriété de l'objet dont il est partie.

La syntaxe correspond à une catégorie dans laquelle est placée une valeur relativement à sa forme.

Le type correspond à une catégorie dans laquelle sont placées toutes les valeurs d'un attribut relativement à leur destination.

L'utilisateur et le service échangent des valeurs aux moyens de descripteurs. Un descripteur comprend normalement une valeur, qui peut parfois être absente, ainsi que des indices (nombres entiers) relatifs à sa syntaxe, son type et sa représentation.

Les attributs d'objets ne sont pas ordonnés, alors que la valeur de ces attributs est ordonnée.

Les objets sont rangés par catégorie sur la base de leur destination et de leur structure interne, chaque catégorie étant appelée une classe. Un objet est dit être une instance de cette classe, qui est caractérisée par les types d'attributs qui peuvent apparaître dans ses instances.

Les classes connexes sont groupées en collections appelées blocs fonctionnels représentés au moyen d'un identificateur d'objets.

Un espace de travail est un répertoire de stockage des instances des classes d'un ou plusieurs blocs fonctionnels associés audit espace de travail. La mise en oeuvre des fonctions de l'interface applicative peut différer d'un espace de travail à un autre. En outre, un bloc fonctionnel peut être associé à chaque espace de travail.

De manière générale, il est accédé à un objet par l'intermédiaire de ce qui est appelé un manipulateur d'objet. Un manipulateur d'objet est le moyen par lequel l'utilisateur fournit un objet au service comme un argument d'une fonction de l'interface applicative et le service retourne un objet à l'utilisateur comme le résultat d'une fonction de ladite interface.

Revenant à la figure 1, l'interface applicative API offre des primitives de services et est prévue pour permettre l'accès au module MIS de services d'informations de gestion dans le but de traiter ou manipuler des objets gérés.

La base MIB est en fait un répertoire d'informations de gestion. Elle est structurée comme une collection d'objets gérés vers lesquels les programmes peuvent accéder par l'intermédiaire de l'interface de manière à autoriser les questions, les mises à jour et les compte-rendus. Egalement, l'interface est structurée de manière à établir un modèle du module MIS pour faciliter le dialogue.

Le système de gestion consiste en une collection de systèmes ouverts qui coopèrent pour conserver les informations de gestion relatives aux objets gérés et qui sont contenues dans la base MIB. Les utilisateurs peuvent lire ou modifier ces informations qui sont typiquement utilisées pour surveiller, contrôler, harmoniser ou configurer des objets propres aux programmes d'application, aux périphériques, aux réseaux, etc ... . Les informations de gestion sont structurées en terme d'objets gérés avec leurs attributs, d'opérations de gestion qui peuvent être appliquées auxdits objets et d'informations qu'ils peuvent émettre. Le jeu d'objets gérés avec ses attributs constitue la base MIB. Chaque objet géré appartient à une classe spécifique qui forme le jeu d'objets partageant le même jeu d'attributs, d'informations à émettre et d'opérations de gestion. Un identificateur d'objet sert à référencer la classe de l'objet géré. De même l'attribut est un élément de l'information qui décrit une propriété de l'objet géré, la valeur associée à cet attribut peut avoir une structure simple ou complexe.

Dans son architecture, l'interface API est liée d'un côté vers le niveau L1 au programme de l'utilisateur et de l'autre côté vers le niveau L3 interagit avec l'infrastructure de communication du module MIS qui fournit les fonctions de communication. Un canal d'entrée/sortie est associé à chaque session débutée, ce canal est utilisé pour la transmission des requêtes asynchrones et la réception des éventuelles confirmations correspondantes ou d'autres indications. Un autre canal unique est créé au niveau inférieur (vers le niveau L3) de l'interface API. Ce dernier est dédié à la transmission des requêtes synchrones et à la réception des éventuelles confirmations correspondantes. De cette manière, l'interface API n'a pas à stocker les éventuelles indications transmises de manière asynchrone par l'infrastructure de communication.

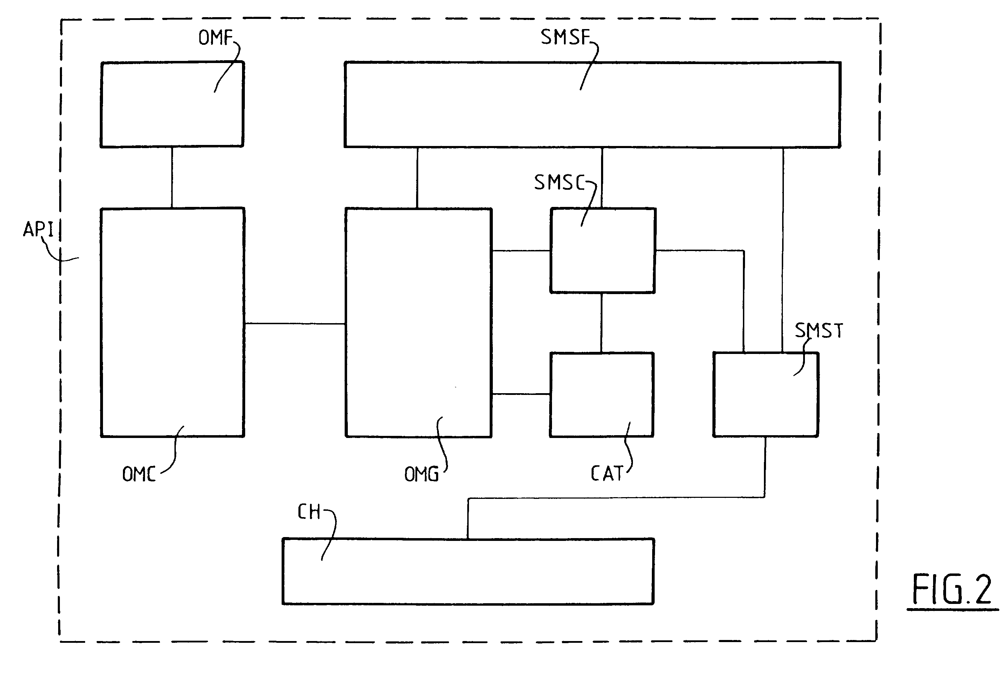

La figure 2 permet de décrire l'architecture propre à l'interface applicative API. L'interface API peut se décomposer en cinq modules principaux décrits ci-après synthétiquement puis plus précisément dans la suite. Un premier module OMC qui traite les objets gérés de manière générique. Dans ce module OMC, les objets privés et les objets publics générés par le service sont créés, modifiés et supprimés aux moyens des fonctions OMF propres à la gestion d'objets. Ce module a pour tâche de préserver la cohérence entre toutes les représentations d'objets et cette cohérence est obtenue au moyen de manipulateurs. Le module OMC crée, lie et délie les manipulateurs qui sont utilisés pour la manipulation des objets.

Un second module OMG traite les objets gérés de manière spécifique. Ce module a pour tâche de manipuler toutes les représentations d'objets privés reçus du module OMC, les représentations d'objets étant elles-mêmes utilisées par les fonctions SMSF des services d'informations de gestion. Pour cela, il garde en mémoire la connaissance relative à la création, à la modification et à la suppression de toutes les classes spécifiques aux services d'informations de gestion.

Un troisième module CAT inclut le catalogue des différentes classes supportées. Ce module CAT est en relation avec le module OMG et contient en particulier une description de toutes les classes relatives d'une part à la gestion d'objets et d'autre part aux services d'informations de gestion. Selon l'idée de l'invention, cette description sert de gabarit pour faciliter l'automatisation des différentes fonctions appliquées aux objets gérés.

Un quatrième module SMSC est en relation avec les modules OMG, SMSF et CAT, il a pour tâche de vérifier la cohérence entre les objets d'entrée et leur utilisation lors de l'application des fonctions SMSF. Pour cela, il doit contrôler les informations et vérifier que les opérations effectuées sur les objets privés ou publics ont été correctement exécutées. En outre, le module SMSC supporte également tout autre contrôle spécifique relatif aux fonctions SMSF.

Un cinquième module SMST est en relation avec les modules SMSC et SMSF et sert à transmettre ou à translater les objets gérés vers le service au niveau L3 au moyen de manipulateurs CH pour la communication. De plus, quand un message doit être envoyé vers le module MIS (figure 1), ou quand un utilisateur désire recevoir un message, une correspondance d'éléments doit être faite entre les objets privés ou publics et les structures d'interface de l'infrastructure de communication, cette tâche de mise en correspondance des éléments est également assignée au module SMST.

Concernant les objets privés traités dans le module OMC, leur représentation fait apparaître deux parties, une entête dont la structure est détaillée ci-après et une représentation effective décrite dans la suite.

Les objets privés ne sont accessibles que par l'intermédiaire des fonctions OMF. Un objet privé est défini par une en-tête qui contient deux descripteurs, le type de l'objet qui est le sous-identificateur de classe, un lien pour maintenir ensemble tous les sous-objets privés de cet objet privé et un pointeur vers l'objet correspondant traité par les fonctions SMSF.

Les deux descripteurs de l'en-tête sont référencés comme éléments 0 et - 1.

Le descripteur - 1 contient :
- les liens de l'objet privé qui maintiennent ensemble tous les objets privés de l'espace de travail.
- le pointeur de l'espace de travail utilisé.

Le descripteur 0 contient :
- l'attribut de classe de cet objet privé,
- deux bits dans la syntaxe qui indique que cet objet est privé.

C'est le descripteur 0 qui est connu de l'utilisateur, le descripteur - 1 étant lui ignoré par ce dernier.

La représentation externe d'un objet privé contrôle au moyen d'un pointeur le descripteur 0, l'utilisateur ignorant l'existence du descripteur - 1.

En ce qui concerne les objets publics, deux types d'objets sont à différencier :
- les objets publics générés et donc fixés par le service, l'utilisateur ne pouvant pas les modifier,
- les objets publics générés et donc fixés par l'utilisateur, ce dernier assurant leur gestion et pouvant les modifier librement.

La représentation interne des objets publics générés par le service correspond à un tableau de descripteurs. Un premier descripteur référencé - 1 contenant le pointeur de l'espace de travail et un second descripteur référencé 0 contenant l'information spécifique aux objets publics générés par le service.

La représentation externe d'un objet public généré par le service contrôle au moyen d'un pointeur le descripteur 0, l'utilisateur ignorant l'existence du descripteur - 1.

Les représentations interne (vue du service) et externe (vue de l'utilisateur) d'un objet public généré par l'utilisateur sont parfaitement identiques. Elles sont représentées par un tableau de descripteurs. L'utilisateur n'intervient pas dans la fixation du descripteur - 1, de même que le service ne doit pas s'y référer.

Quelques précisions doivent également être apportées concernant la structure des données internes de l'espace de travail. Le service maintient les objets privés dans l'espace de travail qui est un répertoire des instances de classes. L'interface de l'espace de travail fournit une macro définition pour chaque fonction dans l'interface de service qui utilise des structures de données définies pour la mise en oeuvre des fonctions appropriées aux arguments particuliers.

Concernant la représentation des objets privés dans le module OMG et conformément à l'idée de l'invention le procédé de gestion utilise une représentation des objets privés sensiblement égale à la représentation publique de sorte que les paramètres soient manipulés de manière générique, un objet public étant représenté au moyen d'un tableau de descripteurs alors qu'un objet privé est représenté au moyen d'une liste de descripteurs.

La représentation privée permet de simplifier les fonctions OMF. D'une part, seules des opérations dans la liste (insertion, suppression d'un élément dans la liste) sont nécessaires pour mettre en oeuvre une quelconque fonction OMF et d'autre part, la mise en oeuvre de toutes les fonctions OMF est indépendante de la définition de la classe. En effet, comme l'interface peut définir un grand nombre de classes d'objets (plus de 160), il est capital d'automatiser les fonctions OMF appliquées aux objets privés.

Ainsi et toujours conformément à l'idée de l'invention, il est prévu un module CAT qui est un catalogue organisé selon une structure spécifiant une définition globale des différentes classes supportées à partir d'une liste de l'ensemble des classes de manière à automatiser les différentes fonctions OMF de l'interface applicative.

L'utilisation d'un tel catalogue entraîne différents avantages. Tout d'abord, la hiérarchie des classes peut être aisément maintenue. Ensuite, lorsqu'un attribut est modifié, la modification apportée est répercutée immédiatement et automatiquement pour toutes les sous-classes concernées. De plus, lorsqu'un attribut d'une classe concerne également d'autres classes, ces différentes classes peuvent partager ce même attribut et lors de la modification de sa définition cette dernière est répercutée à toutes les classes partageant cet attribut. Enfin, les instances de classes sont alors rendues indépendantes de la définition de la classe.

Le module SMST, module de translation des objets gérés vers le service du niveau L3, remplit une tâche essentielle qui est de mettre en oeuvre la correspondance d'éléments entre les paramètres d'entrée et de sortie des fonctions SMSF et les structures d'interface de l'infrastructure de communication. Lorsqu'un message doit être envoyé vers l'infrastructure de communication, une correspondance d'éléments doit être réalisée entre les objets d'entrée relatifs aux services d'informations de gestion et l'interface supérieure de l'infrastructure de communication. De même, lorsqu'un message provenant de l'infrastructure de communication est reçu, une correspondance d'éléments doit être exécutée entre l'interface supérieure de l'infrastructure de communication et les objets de sortie relatifs aux services d'informations de gestion.

Le module SMST inclut pour cela deux sous-modules :
- un sous-module dit de descente qui contient les fonctions de mise en correspondance des éléments constitutifs d'entrée relatifs aux services d'informations de gestion avec ceux de la structure d'interface appropriée de l'infrastructure de communication, chaque bloc fonctionnel d'objets gérés étant associé à un sous-module séparé.
- un sous-module dit de montée qui contient les fonctions de mise en correspondance des éléments constitutifs de la structure d'interface de l'infrastructure de communication avec ceux des objets de sortie appropriés relatifs aux services d'informations de gestion, chaque bloc fonctionnel d'objets gérés étant également associé à un sous-module séparé.

Les objets gérés sont translatée par le module SMST au moyen de manipulateurs CH pour la communication dont le rôle est d'organiser la communication avec l'infrastructure de communication. Pour cela, des fonctions internes aux manipulateurs CH, sont définies de manière à établir ou supprimer la connexion avec l'infrastructure de communication et à envoyer ou recevoir des informations.

Le module SMSC vérifie la cohérence entre les objets d'entrée et leur utilisation lors de l'application des fonctions SMSF, pour cela il recueille les résultats des opérations de vérification sur les primitives de service relatives aux services d'informations de gestion. Il vérifie les paramètres d'entrée et effectue tout contrôle spécifique. Une fonction de vérification est associée à chaque primitive des services d'informations de gestion et centralise tous les contrôles spécifiés par l'interface. Une fonction est prévue également pour vérifier la validité de la syntaxe d'un objet relatif aux services d'information de gestion. Elle a pour but d'assurer que l'objet est bien formaté indépendamment des fonctions SMSF. Elle utilise les structures de données internes des classes relatives aux objets gérés et aux services d'information de gestion.

Les principales fonctions OMF relatives aux objets gérés et appliquées par le module OMC sont ci-dessous explicitées, elles concernent :
* La copie d'un objet privé qui consiste à :
   - définir une en-tête pour le nouvel objet privé à partir de l'ensemble des en-têtes d'objets,
   - définir les objets relatifs aux services d'informations de gestion référencés dans l'objet original, à partir de l'ensemble d'objets correspondant,
   - copier les informations de l'objet original vers le nouvel objet, de nouveaux emplacements en mémoire dépendant des valeurs d'attribut pouvant être envisagés (chaînes d'objets, type d'attribut à plusieurs valeurs, ...),
   - pour une copie exécutée avec succès, retourner le nouveau manipulateur d'objet dans le paramètre de sortie, sinon un code d'erreur est retourné,
* La copie d'une chaîne entre objets privés qui consiste à :
   - vérifier les paramètres d'entrée,
   - pour le type de source spécifié, chercher la valeur conforme à la position de la valeur de la source,
   - pour le type de destination spécifié, chercher la valeur conforme à la position de la valeur de la destination,
   - copier la chaîne de la source à !a destination, cette copie place ou replace la chaîne dans l'objet de destination, la syntaxe de la copie étant celle de la source,
   - si la copie est exécutée sans succès, retour d'un code d'erreur.
* La création d'un objet privé qui consiste à :
   - vérifier la validité des paramètres d'entrée (classe, espace de travail, ...),
   - définir une en-tête d'objet à partir de l'ensemble des en-têtes d'objets,
   - définir l'objet relatif aux services d'informations de gestion à partir de l'ensemble d'objets correspondant,
   - initialiser l'en-tête de l'objet (descripteur - 1 et 0, type d'objet et pointeur de l'objet relatif aux services d'informations de gestion),
   - initialiser les valeurs initiales de l'objet relatif aux services d'informations de gestion (si le paramètre d'initialisation de l'objet est correct),
   - si la création est réalisée avec succès, retourner le manipulateur d'objet créé dans le paramètre de sortie (objet), sinon un code d'erreur est retourné.
* La création d'un manipulateur, cette fonction permet de créer une en-tête d'objet privé pour l'objet spécifié relatif aux services d'informations de gestion, elle implique les actions suivantes :
   - vérification de la validité de la classe,
   - définition d'une en-tête d'objet à partir de l'ensemble des en-têtes d'objets,
   - initialisation de l'en-tête d'objet (descripteur - 1 et 0, type d'objet et pointeur de l'objet relatif aux services d'informations de gestion),
   - si la création est opérée avec succès, retour d'un manipulateur d'objet dans le paramètre de sortie (objet), sinon il y a retour d'un code d'erreur (mauvais choix de classe, mémoire insuffisante).
* Le décodage du résultat d'un objet privé codé qui consiste à :
   - vérifier la validité de la classe,
   - créer un objet privé correspondant à la classe de l'objet codé,
   - pour une création exécutée, appeler le programme de codage,
   - retourner un message de succès.
* La suppression d'un objet privé ou d'un objet public généré par le service qui consiste à :
   - pour des objets publics générés par le service, libérer les descripteurs et les ressources occupées par les valeurs d'attribut, cette libération étant appliquée de manière récursive à tous les sous-objets publics (il n'y a aucun effet sur les sous-objets privés), la place libérée étant réinsérée dans les listes libres appropriées,
   - pour des objets privés, libérer l'en-tête d'objet, l'objet correspondant relatif aux services d'informations de gestion et les ressources occupées par les valeurs d'attribut, cette libération étant appliquée de manière récursive à tous les sous-objets privés qui peuvent avoir une en-tête à libérer, l'en-tête de l'objet libérée et l'objet relatif aux services d'informations de gestion sont réinsérés dans les listes libres appropriées,
   - pour une suppression non exécutée, retour d'un code d'erreur.
* Le codage d'un objet privé qui consiste à :
   - vérifier la validité de la classe,
   - créer un objet privé codé,
   - pour une création exécutée, appeler le programme de codage,
   - retourner un message de succès.
* L'obtention de copies des valeurs d'attributs d'un objet privé qui consiste à :
   - vérifier les paramètres d'entrée (exclusions, types inclus, valeur initiale, valeur de limitation),
   - évaluer le nombre de descripteurs suivant les exclusions requises (types et valeurs),
   - si l'exclusion de descripteurs est spécifiée, le paramètre "nombre total" est remis à jour avec ce nombre évalué et il y a retour à la fonction,
   - définir le nombre évalué de descripteurs (- 1 et 0) et de descripteurs terminaux à partir de l'ensemble de descripteurs (ces descripteurs étant contigus),
   - initialiser les descripteurs - 1 et 0,
   - suivant les exclusions requises, initialiser chaque descripteur avec le type et la syntaxe de l'attribut, copier la valeur, à partir de l'objet original, si l'exclusion des valeurs est spécifiée aucune valeur n'est copiée, si l'exclusion est multiple et si l'attribut a plus d'une valeur aucune valeur n'est copiée, si la syntaxe de la valeur est une chaîne alors une chaîne est définie à partir de l'ensemble des chaînes avant copie, si la valeur de la syntaxe est un objet et l'exclusion de sous-objets est spécifiée alors une en-tête d'objet est définie à partir de l'ensemble d'en-têtes d'objets et est initialisée en se référant à ce sous-objet privé, si la syntaxe de la valeur est un objet et l'exclusion des sous-objets n'est pas spécifiée alors la fonction est appliquée à ce sous-objet, la valeur référençant le descripteur 0 de ce sous-objet public,
   - en cas d'échec de l'obtention alors le manipulateur d'objet public créé est retourné dans le paramètre de sortie (copie), sinon un code d'erreur est retourné.
* Le test d'une classe d'objet qui consiste à :
   - vérifier la validité de la classe (le bloc fonctionnel doit être supporté par l'espace de travail et la classe doit exister),
   - si l'attribut de classe est égal au paramètre de classe alors valider le paramètre de sortie de l'instance et retourner un message de succès, sinon vérifier si la classe est une sous-classe de la classe spécifiée (une liste de classes est associée à chaque bloc fonctionnel, chaque classe possède une liste de ses propres sous-classes, les classes et sous-classes sont repérées par un identificateur d'objet),
   - si la classe est une instance d'une sous-classe d'un paramètre de classe, alors valider le paramètre de sortie de l'instance sinon l'invalider (dans les deux cas, la fonction émet un message de succès).
* La mise des valeurs d'attributs dans un objet privé (la source pouvant être privée ou publique, un code spécifique existant dans ces deux cas) qui consiste à :
   - vérifier au début certains paramètres d'entrée, les autres étant vérifiés lors d'une requête,
   - pour chaque type d'attribut, appliquer la modification requise à l'objet de destination, pour une insertion de valeur définir la zone mémoire de l'ensemble correspondant à la syntaxe de la valeur appropriée avant de copier la valeur, pour un remplacement de valeur, les valeurs de la sources sont substituées aux valeurs de destination spécifiées (la libération ou l'allocation d'une zone mémoire est possible).
* La lecture d'un segment d'une chaîne dans un objet privé qui consiste à :
   - vérifier les paramètres d'entrée,
   - pour le type spécifié, chercher la valeur de l'élément à lire suivant les paramètres d'entrée de position de la valeur et de position de l'élément,
   - copier le nombre d'éléments, le registre tampon de destination et la longueur de chaîne maximum à lire étant spécifiés dans les paramètres d'éléments,
   - en cas de succès, mettre à jour la position de l'élément avec, soit la position suivant le dernier élément lu, soit zéro si la valeur de l'élément final était lue, mettre à jour la longueur de la chaîne avec le nombre effectivement lu.
* Le retrait des valeurs d'attributs d'un objet privé qui consiste à :
   - vérifier les paramètres d'entrée, le type doit être valide et le nombre de valeurs restantes doit être conforme à la spécification,
   - libérer le stockage de données des valeurs spécifiées (sous-objets, chaînes), si la valeur est un objet, la fonction suppression lui est appliquée, l'espace occupé par les valeurs d'attributs est réinséré dans la liste libre appropriée,
   - retirer l'attribut si aucune valeur ne reste,
   - en cas d'insuccès du retrait, retour d'un code d'erreur.
* L'écriture d'un segment d'une chaîne dans un objet privé qui consiste à :
   - vérifier les paramètres d'entrée,
   - pour le type spécifié, rechercher la valeur de l'élément à écrire suivant les paramètres d'entrée de position de la valeur et de position de l'élément, si la position de la valeur égale le nombre de valeurs présentes, le segment est inséré dans l'attribut comme une valeur nouvelle (dans ce cas la nouvelle valeur a la syntaxe spécifiée sinon l'argument de syntaxe est ignoré),
   - copier le nombre d'éléments (le registre tampon de source et la longueur de la chaîne à écrire sont spécifiés dans les paramètres d'éléments),
   - en cas de succès, mettre à jour la position de l'élément avec la position suivant le dernier élément écrit et la longueur de la chaîne de la valeur de l'attribut de l'objet concerné.

De même, les principales fonctions de gestion de la mémoire sont ci-dessous formulées, elles concernent :
* L'initialisation qui consiste à :
   - définir et initialiser les structures de données utilisées par la gestion de la mémoire (la structure de données de base étant un tableau avec une entrée pour chaque type de structure de données, aucun ensemble d'objets n'est alloué à ce niveau),
   - retourner la valeur 1 si l'emplacement mémoire est insuffisant.
* La définition ou allocation des structures de données types pour lesquelles :
   - un ou plusieurs blocs contigus sont détachés de la liste libre et un pointeur les désignant est retourné, le paramètre de type étant utilisé pour sélectionner le bon ensemble,
   - l'ensemble est défini et alloué au premier appel de la fonction,
   - si la liste libre est vide, la fonction est réexécutée,
   - la valeur 0 est retournée si l'emplacement mémoire est insuffisant.
* La libération des structures de données types pour lesquelles :
   - les blocs qui contiennent les structures de données sont de nouveau associés dans la liste libre,
   - lorsque c'est possible les blocs libérés doivent être recombinés avec le bloc le plus proche.
* La définition ou allocation et la copie de la chaîne spécifiée qui consiste à :
   - détacher de la liste libre un ou plusieurs blocs contigus (suivant la longueur de la chaîne), ces blocs étant installés selon la valeur de la chaîne et un pointeur les désignant étant retourné,
   - l'ensemble est alloué au premier appel de la fonction,
   - réexécuter la fonction si la liste libre est vide,
   - retourner la valeur 0 si l'emplacement mémoire est insuffisant.
* La libération de la chaîne spécifié qui consiste à :
   - réassocier dans la liste libre les blocs contigus qui contiennent la chaîne,
   - recombiner, lorsque c'est possible, les blocs libérés au bloc le plus proche.

En outre, les principales fonctions ou primitives SMSF relatives à l'interface des services d'informations de gestion sont ci-dessous listées (pour plus de précisions se reporter au document précédemment cité : "Consolidated Management API Specification" version 1.0 - 1 May 1991, dans lequel sont décrites ces fonctions), elles concernent :
- l'abandon local (à l'interface) d'un résultat d'une opération ou d'une information confirmée mais en attente s'exécutant de manière asynchrone,
- la requête d'une action à faire exécuter par des objets gérés,
- la réponse à une requête d'action,
- l'ouverture d'une session de gestion,
- l'annulation d'un résultat d'une opération de demande d'obtention du type ordonné en attente, s'exécutant de manière asynchrone,
- la réponse à une annulation d'une opération de demande d'obtention,
- la demande de création d'un nouvel objet géré,
- la réponse à une demande de création,
- la demande de suppression d'un objet géré,
- la réponse à une demande de suppression,
- le retour d'un message d'erreur décrivant une erreur particulière,
- la demande de compte-rendu d'une information émise par un objet géré,
- la réponse à la demande de compte-rendu d'une information de gestion,
- la demande d'obtention d'une information de gestion,
- la réponse à la demande d'obtention d'une information de gestion,
- la demande d'obtention de l'argument d'une opération (ou information) de gestion reçue ou la récupération du résultat d'une opération (ou information) de gestion exécutée de manière asynchrone,
- la demande de modification (remplacement, retrait, addition) des valeurs d'attribut d'un objet géré,
- la réponse à la demande de modification,
- la fermeture (mise de côté, abandon) d'un espace de travail,
- l'initialisation de l'interface,
- la libération d'une session de gestion,
- l'établissement des caractéristiques de l'interface et du service.

Le module SMSC comporte également des fonctions de vérification des fonctions ou primitives SMSF en particulier :
- la vérification de la validité des paramètres d'entrée et tout autre contrôle spécifique à la fonction SMSF d'abandon,
- la vérification de la validité des paramètres d'entrée et tout autre contrôle à la fonction SMSF de requête d'action,
- la vérification de la validité des paramètres d'entrée et tout autre contrôle spécifique à la fonction SMSF de réponse à une requête d'action,
- la vérification de la validité des paramètres d'entrée et tout autre contrôle spécifique à la fonction SMSF d'ouverture de session de gestion,
- la vérification de la validité des paramètres d'entrée et tout autre contrôle spécifique à la fonction SMSF d'annulation d'un résultat,
- la vérification de la validité des paramètres d'entrée et tout autre contrôle spécifique à la fonction SMSF de réponse à une annulation,
- la vérification de la validité des paramètres d'entrée et tout autre contrôle spécifique à la fonction SMSF de demande de création,
- la vérification de la validité des paramètres d'entrée et tout autre contrôle spécifique à la fonction SMSF de réponse à une demande de création,
- la vérification de la validité des paramètres d'entrée et tout autre contrôle spécifique à la fonction SMSF de demande de suppression,
- la vérification de la validité des paramètres d'entrée et tout autre contrôle spécifique à la fonction SMSF de réponse à une demande de suppression,
- la vérification de la validité des paramètres d'entrée et tout autre contrôle spécifique à la fonction SMSF de demande de compte-rendu,
- la vérification de la validité des paramètres d'entrée et tout autre contrôle spécifique à la fonction SMSF de réponse à une demande de compte-rendu,
- la vérification de la validité des paramètres d'entrée et tout autre contrôle spécifique à la fonction SMSF de demande d'obtention de copies,
- la vérification de la validité des paramètres d'entrée et tout autre contrôle spécifique à la fonction SMSF de réponse à la demande d'obtention de copies,
- la vérification de la validité des paramètres d'entrée et tout autre contrôle spécifique à la fonction SMSF de demande d'obtention d'argument ou de récupération du résultat d'une opération,
- la vérification de la validité des paramètres d'entrée et tout autre contrôle spécifique à la fonction SMSF de demande de modification,
- la vérification de la validité des paramètres d'entrée et tout autre contrôle spécifique à la fonction SMSF de réponse à la demande de modification,
- la vérification de la validité des paramètres d'entrée et tout autre contrôle spécifique à la fonction SMSF de fermeture de session de gestion.

Le module SMST utilise également un jeu de fonctions spécifique dont les principales concernent :
* Relativement au sous-module de descente :
   - la translation vers le bas d'une instance d'une classe d'objets gérés dans le bloc d'informations approprié de la structure d'interface de l'infrastructure de communication,
   - la translation vers le bas des paramètres d'entrée dans la structure d'interface appropriée de l'infrastructure de communication.
* Relativement au sous-module de montée :
   - la translation d'un bloc d'informations de la structure d'interface de l'infrastructure de communication vers une instance d'une classe d'objets gérés,
   - la translation des structures d'interface de l'infrastructure de communication vers l'instance d'objets gérés appropriée.

Les manipulateurs d'objets CH utilisent également un jeu de fonctions dont les principales concernent :
- l'ouverture d'un canal d'entrée/sortie avec l'infrastructure de communication,
- la fermeture du canal d'entrée/sortie préalablement ouvert,
- l'envoi d'un message vers l'infrastructure de communication sur un canal d'entrée/sortie préalablement ouvert,
- la réception d'un message provenant de l'infrastructure de communication sur un canal d'entrée/sortie préalablement ouvert,
- l'attente de réception d'un message provenant de l'infrastructure de communication sur un canal d'entrée/sortie préalablement ouvert.

Enfin et conformément à l'invention le module OMG utilise avantageusement des fonctions originales relatives aux objets gérés qui seront décrites dans la suite.

En effet, lorsque les fonctions OMF appliquées au module OMC ont permis de mettre à jour le lien, par l'intermédiaire de manipulateurs CH d'objets privés, le module OMG doit réaliser la représentation effective des objets privés. De manière à séparer la manipulation au moyen des manipulateurs CH, qui est indépendante de la définition de classe des objets gérés, d'avec l'application des fonctions pour l'obtention de la représentation effective, une interface de fonctions utilisées par le module OMG a été définie pour chaque fonction.

Ainsi de manière remarquable, le procédé de gestion d'objets utilise une interface de fonctions parmi lesquelles la fonction aiguillage de création consiste principalement à rechercher la description de la classe de l'objet dans le catalogue puis à vérifier le résultat de cette recherche et si le paramètre d'initialisation de l'objet correspondant est correct, à créer les attributs pour la classe concernée et les classes hiérarchiquement supérieures en cas d'héritage, les valeurs initiales étant trouvées dans le catalogue.

De manière remarquable également, le procédé de gestion d'objets utilise une interface de fonctions parmi lesquelles la fonction aiguillage de décodage consiste principalement à rechercher la classe de l'objet dans le catalogue puis à vérifier la conformité de la recherche, ensuite à effectuer le décodage de la valeur et enfin à créer et initialiser l'objet correspondant.

De manière remarquable également, le procédé de gestion d'objets utilise une interface de fonctions parmi lesquelles la fonction d'aiguillage de suppression consiste principalement pour chaque descripteur à supprimer les sous-objets lorsqu'ils existent, la chaîne lorsqu'elle existe puis à supprimer l'objet courant.

De manière remarquable également, le procédé de gestion d'objets utilise une interface de fonctions parmi lesquelles la fonction aiguillage de codage consiste principalement à rechercher la classe de l'objet dans le catalogue puis à vérifier la conformité de la recherche, ensuite à coder la valeur et enfin à créer l'objet codé.

De manière remarquable également, le procédé de gestion d'objets utilise une interface de fonctions parmi lesquelles la fonction aiguillage d'obtention de copie consiste principalement à, pour chaque exclusion, ne retenir que les attributs nécessaires en restituant les autres attributs, à calculer le nombre de descripteurs puis à allouer l'emplacement mémoire et enfin à copier l'information.

De manière remarquable également le procédé de gestion d'objets utilise une interface de fonctions parmi lesquelles la fonction aiguillage de test d'une classe d'objets consiste principalement à rechercher la classe dans le catalogue puis à vérifier que l'objet appartient à cette classe ou à une classe hiérarchiquement supérieure en cas d'héritage.

De manière remarquable également, le procédé de gestion d'objets utilise une interface de fonctions parmi lesquelles la fonction aiguillage de mise dans l'objet des valeurs d'attributs consiste principalement à, si l'objet source est un objet public, le transformer en représentation privée, puis à rechercher la description de l'objet de destination dans le catalogue et pour chaque attribut de l'objet source, effectuer la mise des valeurs d'attributs dans l'objet de destination en fonction de la modification requise.

Il est en outre à remarquer que l'interface de fonctions utilisée par le procédé ne présente pas les fonctions d'aiguillage du type :
- "copie d'un objet" mais que le procédé fait appel pour cela aux fonctions OMF du type "obtention de copie" et "mise dans l'objet des valeurs d'attribut",
- "copie d'une chaîne entre objets privés" mais que le procédé fait appel pour cela aux fonctions OMF du type "obtention de copie", "création d'un objet privé" et "mise dans l'objet des valeurs d'attributs",
- "lecture d'un segment d'une chaîne dans un objet privé" mais que le procédé fait appel pour cela à fonction OMF du type "obtention de copie",
- "retrait des valeurs d'attributs d'un objet privé" mais que le procédé fait appel pour cela aux fonctions OMF du type "obtention de copie" et "mise dans l'objet des valeurs d'attributs",
- "écriture d'un segment d'une chaîne dans un objet privé" mais que le procédé fait appel pour cela aux fonctions OMF du type "obtention de copie" et "mise dans l'objet des valeurs d'attributs".

En outre, une fonction de vérification de syntaxe est utilisée dans le module OMG pour contrôler la validité de la syntaxe et donc le formatage correct de l'objet.

Pour conclure, le procédé de gestion d'objets structurés selon l'invention est particulièrement avantageux en ce qu'il autorise une manipulation des objets privés indépendante de leur définition, améliorant ainsi l'efficacité en simplifiant considérablement le traitement des objets. En effet, une fois la liste des descripteurs établie, toutes les fonctions sont appliquées de manière totalement automatique et indépendante des classes et l'interface est ainsi utilisée de manière performante. De plus, le choix d'un catalogue présentant la liste des classes supportées permet de rester indépendant de la définition d'une classe, l'aspect sémantique lié à la classe n'étant alors plus préoccupant. Grâce à ce choix, il est obtenu une quasi-généricité rendant la manipulation automatique et l'interface applicative indépendante du service, le catalogue étant simplement rempli avec les paramètres de service. En outre, le fait que le catalogue soit rempli de manière automatique à partir des spécifications, ces dernières étant simplement parcourues pour le remplir, entraîne automatiquement la régénération dudit catalogue lors d'un changement de spécifications. Enfin, outre le gain en performance très sensible apporté par l'utilisation du présent procédé, un autre aspect d'importance est à signaler qui tient au contrôle syntaxique des objets obtenu avantageusement et qui permet un contrôle automatique entre un objet et sa spécification fournissant ainsi une procédure globale pour la vérification.

## Revendications

1. Procédé de gestion d'objets structurés par une interface applicative fournissant une pluralité de services, définissant un jeu de fonctions et l'ensemble d'objets structurés sous des formes publiques et privées représentées au moyen de descripteurs et arrangés selon différentes classes ayant chacune sa description, chaque classe offrant des primitives de service comportant des paramètres définis par l'intermédiaire desdits objets et étant prévue pour être utilisée avec d'autres interfaces applicatives, caractérisé en ce qu'un objet public est représenté au moyen d'un tableau de descripteurs alors qu'un objet privé est représenté au moyen d'une liste de descripteurs de sorte que les paramètres peuvent être manipulés de manière générique, et en ce que un catalogue est organisé selon une structure spécifiant une définition globale des différentes classes supportées à partir d'une liste desdites classes de manière à automatiser les différentes fonctions de l'interface applicative.

2. Procédé de gestion d'objets structurés selon la revendication 1, caractérisé en ce qu'il utilise une interface de fonctions, définie pour chaque fonction relative aux objets gérés pour traiter la représentation effective d'un objet privé, parmi lesquelles la fonction aiguillage de création consiste principalement à rechercher la description de la classe de l'objet dans le catalogue puis à vérifier le résultat de cette recherche et si le paramètre d'initialisation de l'objet correspondant est correct, à créer les attributs pour la classe concernée et les classes hiérarchiquement supérieures en cas d'héritage, les valeurs initiales étant trouvées dans le catalogue.

3. Procédé de gestion d'objets structurés selon les revendications 1 ou 2, caractérisé en ce qu'il utilise une interface de fonctions, définie pour chaque fonction relative aux objets gérés pour traiter la représentation effective d'un objet privé, parmi lesquelles la fonction aiguillage de décodage consiste principalement à rechercher la classe de l'objet dans le catalogue puis à vérifier la conformité de la recherche, ensuite à effectuer le décodage de la valeur et enfin à créer et initialiser l'objet correspondant.

4. Procédé de gestion d'objets structurés selon l'une des revendications 1 à 3, caractérisé en ce qu'il utilise une interface de fonctions, définie pour chaque fonction relative aux objets gérés pour traiter la représentation effective d'un objet privé, parmi lesquelles la fonction aiguillage de suppression consiste principalement pour chaque descripteur à supprimer les sous-objets lorsqu'ils existent, la chaîne lorsqu'elle existe puis à supprimer l'objet courant.

5. Procédé de gestion d'objets structurés selon l'une des revendications 1 à 4, caractérisé en ce qu'il utilise une interface de fonctions, définie pour chaque fonction relative aux objets gérés pour traiter la représentation effective d'un objet privé, parmi lesquelles la fonction aiguillage de codage consiste principalement à rechercher la classe de l'objet dans le catalogue puis à vérifier la conformité de la recherche, ensuite à coder la valeur et enfin à créer et initialiser l'objet codé.

6. Procédé de gestion d'objets structurés selon l'une des revendications 1 à 5, caractérisé en ce qu'il utilise une interface de fonctions, définie pour chaque fonction relative aux objets gérés pour traiter la représentation effective d'un objet privé, parmi lesquelles la fonction aiguillage d'obtention de copie consiste principalement à, pour chaque exclusion, ne retenir que les attributs nécessaires, en restituant les autres attributs, à calculer le nombre de descripteurs puis à allouer l'emplacement mémoire et enfin à copier l'information.

7. Procédé de gestion d'objets structurés selon l'une des revendication 1 à 6, caractérisé en ce qu'il utilise une interface de fonctions, définie pour chaque fonction relative aux objets gérés pour traiter la représentation effective d'un objet privé, parmi lesquelles la fonction aiguillage de test d'une classe d'objets consiste principalement à rechercher la classe dans le catalogue puis à vérifier que l'objet appartient à cette classe ou à une classe hiérarchiquement supérieure en cas d'héritage.

8. Procédé de gestion d'objets structurés selon l'une des revendications 1 à 7, caractérisé en ce qu'il utilise une interface de fonctions, définie pour chaque fonction relative aux objets gérés pour traiter la représentation effective d'un objet privé, parmi lesquelles la fonction aiguillage de mise dans l'objet des valeurs d'attributs consiste principalement à, si l'objet source est un objet public, le transformer en représentation privée, puis à rechercher la description de l'objet de destination dans le catalogue et pour chaque attribut de l'objet source effectuer la mise des valeurs d'attributs dans l'objet de destination en fonction de la modification requise.

## Patentansprüche

1. Verfahren zum Verwalten von strukturierten Objekten durch eine Anwenderschnittstelle, die mehrere Dienste liefert, die eine Gruppe von Funktionen und die Gesamtheit von strukturierten Objekten in öffentlichen und privaten Formen definiert, die durch Deskriptoren repräsentiert werden und in unterschiedlichen Klassen angeordnet sind, wovon jede ihre Deskription besitzt, und die Grunddienste anbietet, die Parameter enthalten, die über die Objekte definiert sind, und dazu vorgesehen ist, mit anderen Anwenderschnittstellen verwendet zu werden, dadurch gekennzeichnet, daß ein öffentliches Objekt durch eine Tabelle von Deskriptoren repräsentiert wird, während ein privates Objekt durch eine Liste von Deskriptoren repräsentiert wird, derart, daß die Parameter gattungsmäßig behandelt werden können, und daß ein Katalog in einer Struktur organisiert ist, die eine globale Definition der verschiedenen Klassen spezifiziert, die auf eine Liste der Klassen gestützt sind, derart, daß die verschiedenen Funktionen der Anwenderschnittstelle automatisiert werden.

2. Verfahren zum Verwalten von strukturierten Objekten nach Anspruch 1, dadurch gekennzeichnet, daß es eine Funktionsschnittstelle verwendet, die für jede auf die verwalteten Objekte bezogene Funktion definiert ist, um die effektive Repräsentation eines privaten Objekts zu verarbeiten, wobei unter diesen die Erzeugungsverzweigungsfunktion hauptsächlich darin besteht, die Deskription der Klasse des Objekts im Katalog zu suchen, dann das Ergebnis dieser Suche zu verifizieren und dann, wenn der Initialisierungsparameter des entsprechenden Objekts korrekt ist, die Attribute für die betreffende Klasse und im Vererbungsfall für die hierarchisch höheren Klassen zu erzeugen, wobei sich die Anfangswerte im Katalog befinden.

3. Verfahren zum Verwalten von strukturierten Objekten nach den Ansprüchen 1 oder 2, dadurch gekennzeichnet, daß es eine Funktionsschnittstelle verwendet, die für jede auf die verwalteten Objekte bezogene Funktion definiert ist, um die effektive Repräsentation eines privaten Objekts zu verarbeiten, wobei unter diesen die Decodierungsverzweigungsfunktion hauptsächlich darin besteht, die Klasse des Objekts im Katalog zu suchen und dann die Konformität der Suche zu verifizieren, anschließend die Decodierung des Wertes auszuführen und schließlich das entsprechende Objekt zu erzeugen und zu initialisieren.

4. Verfahren zum Verwalten von strukturierten Objekten nach einem der Ansprüche 1 bis 3, dadurch gekennzeichnet, daß es eine Funktionsschnittstelle verwendet, die für jede auf die verwalteten Objekte bezogene Funktion definiert ist, um die effektive Repräsentation eines privaten Objekts zu verarbeiten, wobei unter diesen die Unterdrückungsverzweigungsfunktion hauptsächlich darin besteht, für jeden Deskriptor die Unterobjekte, sofern vorhanden, und die Kette, sofern vorhanden, zu unterdrücken und dann das momentane Objekt zu unterdrücken.

5. Verfahren zum Verwalten von strukturierten Objekten nach einem der Ansprüche 1 bis 4, dadurch gekennzeichnet, daß es eine Funktionsschnittstelle verwendet, die für jede auf die verwalteten Objekte bezogene Funktion definiert ist, um die effektive Repräsentation eines privaten Objekts zu verarbeiten, wobei unter diesen die Codierungsverzweigungsfunktion hauptsächlich darin besteht, die Klasse des Objekts im Katalog zu suchen, dann die Konformität der Suche zu verifizieren, anschließend den Wert zu codieren und schließlich das codierte Objekt zu erzeugen und zu initialisieren.

6. Verfahren zum Verwalten von strukturierten Objekten nach einem der Ansprüche 1 bis 5, dadurch gekennzeichnet, daß es eine Funktionsschnittstelle verwendet, die für jede auf die verwalteten Objekte bezogene Funktion definiert ist, um die effektive Repräsentation eines privaten Objekts zu verarbeiten, wobei unter diesen die Kopieerlangungsverzweigungsfunktion hauptsächlich darin besteht, für jede Exklusion nur die notwendigen Attribute zu behalten, indem die anderen Attribute wiederhergestellt werden, die Anzahl der Deskriptoren zu berechnen, dann den Speicherplatz zuzuweisen und schließlich die Information zu kopieren.

7. Verfahren zum Verwalten von strukturierten Objekten nach den Ansprüchen 1 bis 6, dadurch gekennzeichnet, daß es eine Funktionsschnittstelle verwendet, die für jede auf die verwalteten Objekte bezogene Funktion definiert ist, um die effektive Repräsentation eines privaten Objekts zu verarbeiten, wobei unter diesen die Verzweigungsfunktion zum Testen einer Klasse von Objekten hauptsächlich darin besteht, die Klasse in dem Katalog zu suchen und dann zu verifizieren, daß das Objekt zu dieser Klasse oder im Vererbungsfall zu einer hierarchisch höherer Klasse gehört.

8. Verfahren zum Verwalten von strukturierten Objekten nach einem der Ansprüche 1 bis 7, dadurch gekennzeichnet, daß es eine Funktionsschnittstelle verwendet, die für jede auf die zu verwaltenden Objekte bezogene Funktion definiert ist, um die effektive Repräsentation eines privaten Objekts zu verarbeiten, wobei unter diesen die Verzweigungsfunktion zur Anordnung von Attributwerten im Objekt hauptsächlich darin besteht, dann, wenn das Quellobjekt ein öffentliches Objekt ist, dieses in eine private Darstellung umzuwandeln, dann die Deskription des Zielobjekts im Katalog zu suchen und für jedes Attribut des Quellobjekts die Anordnung von Attributwerten im Zielobjekt in Abhängigkeit von der geforderten Modifikation auszuführen.

## Claims

1. Method for management of structured objects using an application interface supplying a plurality of services, defining a set of functions and all the structured objects in public and private forms represented by means of descriptors and arranged in different classes each having its description, each class offering service primitives having parameters defined by the intermediary of said objects and being provided so as to be used with other application interfaces, characterised in that a public object is represented by means of a table of descriptors while a private object is represented by means of a list of descriptors, so that the parameters can be manipulated generically, and in that a catalogue is organised according to a structure specifying a global definition of the different classes supported on the basis of a list of said classes so as to automate the different functions of the application interface.

2. Method for management of structured objects according to Claim 1, characterised in that it uses a function interface, defined for each function in relation to the managed objects so as to deal with the effective representation of a private object, among which functions the routing function of creation consists principally in searching for the description of the class of the object in the catalogue and then in verifying the result of this search and if the initialisation parameter of the corresponding object is correct, in creating the attributes for the class concerned and the hierarchically superior classes in the case of inheritance, the initial values being found in the catalogue.

3. Method for management of structured objects according to Claims 1 or 2, characterised in that it uses a function interface, defined for each function in relation to the managed objects so as to deal with the effective representation of a private object, among which functions the routing function of decoding consists principally in searching for the class of the object in the catalogue and then in verifying the conformity of the search, then in effecting the decoding of the value and finally in creating and initialising the corresponding object.

4. Method for management of structured objects according to one of Claims 1 to 3, characterised in that it uses a function interface, defined for each function in relation to the managed objects so as to deal with the effective representation of a private object, among which functions the routing function of elimination consists principally, for each descriptor, in eliminating the sub-objects where they exist, the chain where it exists, and then in eliminating the current object.

5. Method for management of structured objects according to one of Claims 1 to 4, characterised in that it uses a function interface, defined for each function in relation to the managed objects so as to deal with the effective representation of a private object, among which functions the routing function of encoding consists principally in searching for the class of the object in the catalogue and then in verifying the conformity of the search, then in encoding the value and finally in creating and initialising the encoded object.

6. Method for management of structured objects according to one of Claims 1 to 5, characterised in that it uses a function interface, defined for each function in relation to the managed objects so as to deal with the effective representation of a private object, among which functions the routing function of obtaining a copy consists principally, for each exclusion, in retaining only the necessary attributes, in restoring the other attributes, in calculating the number of descriptors, then in allocating the memory location and finally in copying the information.

7. Method for management of structured objects according to one of Claims 1 to 6, characterised in that it uses a function interface, defined for each function in relation to the managed objects so as to deal with the effective representation of a private object, among which functions the routing function of testing a class of objects consists principally in searching for the class in the catalogue, then verifying that the object belongs to that class or to a hierarchically superior class in the case of inheritance.

8. Method for management of structured objects according to one of Claims 1 to 7, characterised in that it uses a function interface, defined for each function in relation to the managed objects so as to deal with the effective representation of a private object, among which functions the routing function of placing attribute values in the object consists principally, if the source object is a public object, in transforming it into a private representation, then in searching for the description of the destination object in the catalogue and, for each attribute of the source object, effecting the placing of attribute values in the destination object acccrding to the modification required.
